# EUROPEAN PATENT APPLICATION

(11) **EP 0 878 229 A2**
(43) Date of publication of application: **18.11.1998**
(21) Application number: 98201615.6
(22) Date of filing: 14.05.1998
(51) Int. Cl.: B01D 61/14, C12P 37/00

(54) **Process for removal of high-molecular compounds from a process stream**

(30) Priority: 16.05.1997 NL 1006071
(71) Applicant: CHEMFERM V.O.F., 4817 HX Breda (NL)
(72) Inventor: Cauwenberg, Veerle, 3010 Leuven (BE); Rijkers, Marinus Petrus Wilhelmus Maria, 6181 DH Stein (NL)
(74) Representative: Jacobs, Monique S.N.

(57) **Abstract**

Process for the removal of high-molecular particles from a process stream by means of ultrafiltration, wherein the ultrafiltration is performed in a unit comprising different stages, which different stages in the course of the ultrafiltration process are successively closed, drained and subjected to diafiltration and washing, the washing liquid leaving the one stage being used again in the next stage. By preference, the unit is set up such that maximum drainage is achieved, for instance by carrying out the drainage under pressure. In particular, the invention is applied to the reaction mixture obtained after enzymatic acylation of a β-lactam core.

## Description

The invention relates to a process for the removal of high-molecular compounds from a process stream by means of ultrafiltration.

The application of ultrafiltration for the removal of high-molecular compounds from process streams is generally known and it is used in particular in processing of waste streams.

A drawback of the application of ultrafiltration, especially where batch processes are involved, is that the concentration factor is relatively low, which means that the losses owing to hold up of the unit are relatively high. This is even still the case if the known ultrafiltration units, with a given membrane surface, are designed optimally in this respect. This drawback has a significant effect in particular when high-molecular compounds, present as impurities for instance, have to be removed from a process stream before the high-grade product is isolated from the process stream. In such a case quantitative recovery of the valuable components from both the permeate and the concentrate is of great importance. In addition, the recovery of the product, for instance fine chemicals, in particular pharmaceuticals, is mostly effected through crystallization, which in general makes flushing and washing procedures, given the resulting high degree of dilution, undesirable from a technical/economic point of view.

It is possible to reduce the hold up by reducing the membrane surface, but this directly entails the adverse effect that the time required for the ultrafiltration increases. Especially in the case of process streams which contain valuable components which are not very stable in solution it is of utmost importance to restrict the time required for the ultrafiltration to a minimum. Moreover, in particular if unstable components are involved, the ultrafiltration temperature has to be kept low, which has a negative effect on the maximum achievable flux, which means that a larger membrane surface is required with a given filtration time.

The invention now provides a process which makes it possible, in a relatively short time and without any significant losses, to recover high-molecular compounds, in particular impurities with low concentrations, from a liquid process stream without a high degree of dilution of the process stream.

This is achieved according to the invention by subjecting the process stream to ultrafiltration, which is performed in a unit comprising different stages, which different stages in the course of the ultrafiltration process are successively closed, drained and subjected to diafiltration and washing, the washing liquid leaving the one stage being used again in the next stage.

A unit has several stages, the different stages being successively closed in the course of the ultrafiltration process, which means that the process stream to be subjected to ultrafiltration is initially conveyed parallel across all stages until a certain concentration factor has been reached, after which one of the stages is closed so that the process stream to be filtered is then only conveyed across the remaining stages, until a certain higher concentration factor is reached, whereupon the next stage is closed, etc. In this way a highly increased concentration factor can be reached.

By the 'concentration factor' which is reached at any moment during the ultrafiltration is understood the ratio of the process stream to be filtered initially to the process stream to be filtered at that particular moment; the maximum concentration factor to be reached in a batchwise mode therefore is the ratio between the volume of the total process stream subjected to ultrafiltration and the hold up of the unit.

When a stage has been closed it is drained and then subjected to diafiltration, for which purpose the diafiltration liquid, which means in the framework of this invention the solvent, for instance water, that is added to the feedstream before the membrane module is reached, can be used again in the other stage(s), so that the dilution is restricted. In this way the losses of valuable components are further reduced.

The number of stages to be installed depends among other things on the process stream, the type of membrane, the required membrane surface and the type of module; it is easy for a person skilled in the art to determine the optimum number of stages for a given situation. The different stages can consist of several modules, depending on the desired capacity. The installed membrane surface can also vary from one stage to the other.

The stages are preferably so designed and installed that they are optimally drainable and as little liquid as possible remains on the membranes. In order to drain as much liquid as possible the draining is preferably carried out with application of an inert gas, for instance nitrogen, under pressure. The drained liquid of the last stage is preferably returned into the process again.

In the process according to the invention all types of module can in principle be used. Suitable ultrafiltration modules that can be used are for instance tubular, capillary, hollow-fibre, flat-plate, spirally wound and disc-type modules. Tubular, capillary or spirally wound modules are used by preference.

The type of membranes used is not critical either. Suitable membranes that can be used are for instance organic (polymeric), organomineral and inorganic membranes.

Polymeric membranes for ultrafiltration are for instance membranes on the basis of polysulphone, polyether sulphone, polyacrylonitrile, cellulose ester, polyimide/polyetherimide, polyamide, polyvinylidene fluoride.

Organomineral membranes consist of a polymeric carrier, for instance polysulphone, to which inorganic precipitates have been added, for instance oxides (Si oxide, Zr oxide or mixtures of oxides).

Examples of inorganic membranes are ceramic membranes, 'glass-like' membranes and metallic membranes; for this application ceramic membranes in particular. Ceramic membranes consist of a combination of a metal, for instance aluminium, titanium or zirconium, and a non-metal in the form of an oxide, a nitride or carbide. Aluminium oxide or alumina (γ-Al₂O₃) and zirconium oxide or zirconia (ZrO₂) are the most commonly applied ceramic membranes.

The dimensions of the high-molecular compounds to be removed will in practice mostly be in the nanometre range, for instance 2-100 nm.

The temperature at which the ultrafiltration is effected is not particularly critical. In view of the risk of damage occurring to the membranes it is not recommendable to carry out the ultrafiltration at a temperature at which the process stream may freeze up. On the other hand the temperature to be applied may be subject to restriction in view of the stability of valuable components in the process stream to be subjected to the ultrafiltration process. If the process stream contains valuable unstable components a low temperature is preferably chosen.

The pH at which the ultrafiltration is effected can vary within wide limits, for instance 0-13. The pH at which the ultrafiltration is preferably carried out also mainly depends on the process stream to be filtered; in practice such a pH is chosen that the components of the process stream are in solution.

The invention is highly suitable to be applied in the preparation of valuable fine chemicals, in particular pharmaceuticals, which are mostly recovered by crystallization and are also less stable. An important example here is the preparation of antibiotics through (enzymatic) acylation of a β-lactam core with a suitable acylation agent, in which process both the β-lactam core and the antibiotic obtained are valuable, mostly not very stable components. The fact is that it has been found that the reaction mixture obtained after the enzymatic acylation reaction, optionally after removal of any solid particles present, for instance immobilized enzyme, often contains high-molecular compounds, for instance proteins or macromolecular compounds (for instance M = 10-100 kDa). These high-molecular compounds have to be removed from the process stream before the antibiotic crystallizes out as a solid substance in order to prevent the final product from being contaminated with traces of undesirable compounds. The applicant has now found that these high-molecular compounds can in essence be removed completely by means of ultrafiltration without significant final product losses.

Known β-lactam antibiotics are for instance cephalexin, amoxicillin, ampicillin, cephaclor, cephadrin, cephadroxil, cephotaxim and cephazolin.

Examples of β-lactam cores are β-lactam cores of the general formula (1) 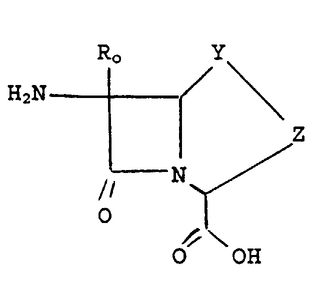 where Rₒ represents H or an alkoxy group with 1-3 carbon atoms; Y represents CH₂, O, S or an oxidated form of sulphur; and Z represents 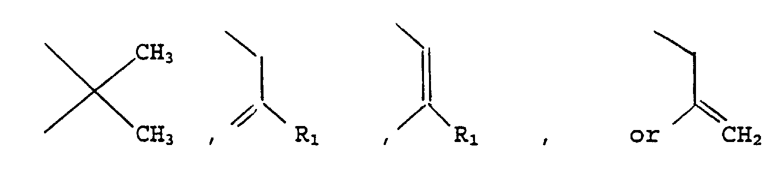 where R₁ for instance stands for H, OH, halogen, an alkoxy group with 1-5 carbon atoms, an alkyl group with 1-5 carbon atoms, a cycloalkyl group with 4-8 carbon atoms, an aryl or a heteroaryl group with 6-10 carbon atoms, with the possibility of the groups being substituted with for instance an alkyl, aryl or alkoxy group with 1-8 carbon atoms; in particular penicillin derivatives, for instance 6-aminopenicillanic acid (6-APA), and cephalosporin derivatives, for instance 7-aminocephalosporanic acid, with or without a substituent on the 3-site (7-ACA), for instance 7-aminodesacetoxy cephalosporanic acid (7-ADCA) and 7-amino-3-chlorocephalosporanic acid (7-ACCA).

In the (enzymatic) acylation reaction the acylation agent used can be for instance be a phenylglycine in activated form, preferably a (primary, secondary or tertiary) amide or salt thereof, or a lower alkyl (1-4C) ester, for instance a methyl ester; suitable phenylglycines are for instance substituted or non-substituted phenylglycines, in particular phenylglycine, p-hydroxyphenylglycine, dihydrophenylglycine.

In the preparation of antibiotics it is advantageous to make use of an immobilized enzyme. A suitable immobilization technique is described for instance in EP-A-222462. Another suitable technique is to immobilize the Penicillin-G acylase on a carrier which contains a gelating agent, for instance gelatin, and a polymer with free amino groups, for instance alginate amine, chitosan or polyethylene imine. It is also possible to use enzymes in crystalline form (Clecs).

Among the immobilized enzymes that are commercially available, highly suitable have been found to be for instance the Escherichia coli enzyme from Boehringer Mannheim GmbH, which is commercially available under the name 'Enzygel®', the immobilized Penicillin-G acylase from Recordati and the immobilized Penicillin-G acylase from Pharma Biotechnology Hannover.

Suitable enzymes for use in said enzymatic acylation reaction and the enzymatic hydrolysis reaction are for instance amidases or acylases, in particular penicillin amidases or acylases. Such enzymes are described for instance by J.G. Shewale et al. in Process Biochemistry, August 1989, pp. 146-154, and by J.G. Shewale et al. in Process Biochemistry International, June 1990, pp. 97-103. Examples of suitable enzymes are enzymes derived from Acetobacter, in particular Acetobacter pasteurianum, Aeromonas, Alcaligenes, in particular Alcaligenes faecalis, Aphanocladium, Bacillus sp., in particular Bacillus megaterium, Cephalosporium, Escherichia, in particular Escherichia coli, Flavobacterium, Fusarium, in particular Fusarium oxysporum and Fusarium solani, Kluyvera, Mycoplana, Protaminobacter, Proteus, in particular Proteus rettgeri, Pseudomonas en Xanthomonas, in particular Xanthomonas citrii.

The enzymatic acylation reaction is mostly carried out at a temperature lower than 40°C, preferably between 0 and 35°C. The pH at which the enzymatic acylation reaction is carried out is mostly between 6 and 10, preferably between 6.5 and 9.

In practice the (enzymatic) acylation reaction and further working up of the reaction mixture are mostly carried out in water. Optionally, the reaction mixture may also contain an organic solvent or a mixture of organic solvents, preferably less than 30 vol.%. Examples of organic solvents that can be used are alcohols with 1-7 carbon atoms, for instance a monoalcohol, in particular methanol or ethanol; a diol, in particular ethylene glycol or a triol, in particular glycerol.

The invention will be further elucidated by means of the following examples, without however being restricted thereto.

### Abbreviations:

CEX = cephalexin
6-APA = 6-aminopenicillanic acid
7-ADCA = 7-aminodesacetoxy cephalosporanic acid
FGA = D-phenylglycine amide
FG = D-phenylglycine
HPGM = D-p-hydroxyphenylglycine methyl ester
Assemblase® is an immobilized Escherichia coli penicillin acylase from E-coli ATCC 11105, as described in WO-A-97/04086. The immobilization was carried out as described in EP-A-222462, with gelatin and chitosan being used as gelating agents, and glutaric aldehyde as crosslinking agent.
The ultimate activity of the Escherichia coli penicillin acylase is determined by the amount of enzyme that has been added to the activated globules and was equal to 3 ASU/g dry weight, 1 ASU (Amoxicillin Synthesis Unit) being defined as the amount of enzyme that per hour generates 1 g of amoxicillin.3H₂O from 6-APA and HPGM (at 20°C; 6.5% 6-APA and 6.5% HPGM).

### Example I

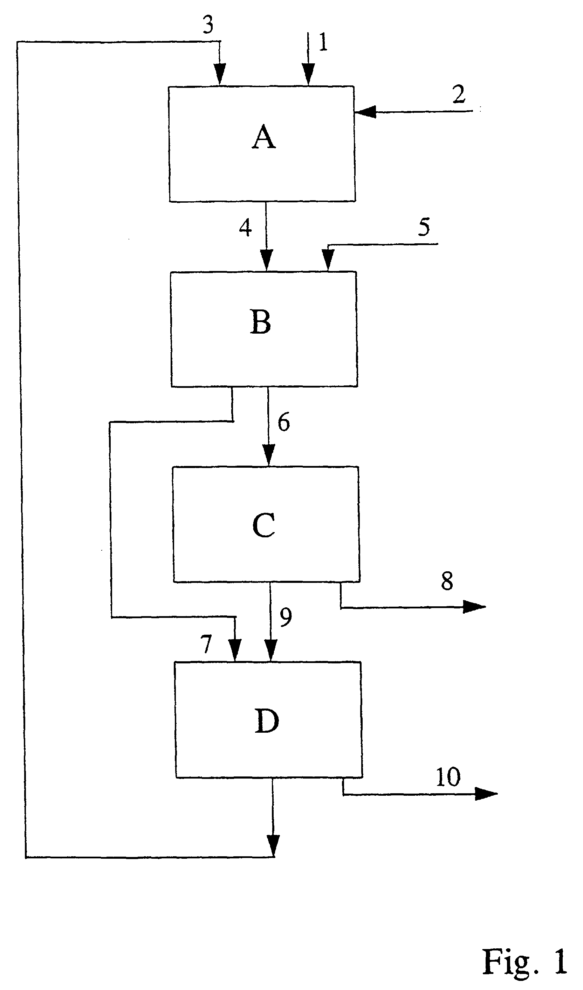

An installation essentially designed as represented in Figure 1 was used. In Figure 1, A is the synthesis section, B the ultrafiltration section, C the product isolation section and D the working-up section. The synthesis section is provided with starting materials supplied via (1). The pH is controlled by addition of an acid or a base via (2), for instance ammonia or sulphuric acid. The recovered starting materials are recycled via (3). The product, obtained in A, is led to section B (ultrafiltration) via (4). The diafiltration water is supplied (5). The permeate is led to section C via (6). There the desired product is recovered via (8). The stream then remaining is led to the working-up section D via (9), as is the drainable volume of the last stage of the ultrafiltration unit, via (7), where these streams are purified. The purified stream, which still contains starting materials, is recycled to the reactor via (3), while the remaining stream is discharged via (10).

452.4 kg of ADCA, 262.5 kg of FGA and 2475 litres of water were successively supplied to a preparation reactor. The mixture was cooled to 2°C and then 29 litres of ammonia were added.

This mixture was transferred to a sieve bottom (sieve pore size = 175 µm) which contained 260 kg net of wet Assemblase®. At the same moment stirring was started (45 rpm) and the preparation reactor was rewashed with 100 litres of water; this water was also supplied to the enzyme reactor. The temperature was kept at 2°C.

After 4.5 hours the pH was set to 8.6 with ammonia, whereupon the reactor was emptied to a buffer vessel via the sieve bottom. The reactor was then washed with 435 litres of water and this washing water was also supplied to the buffer vessel.

The resulting condensate stream (about 3800 litres) contained cephalexin, 7-ADCA, FGA and FG and 1000 ppm of high-molecular compounds, at pH = 8.5 and 5°C. The stream was filtered across a 20 µm filter. Next the stream was supplied to an ultrafiltration unit consisting of tubular polysulphone membranes (PU 608; PCI). The ultrafiltration was also carried out at 5°C in a unit of 202.8 m², which enabled the filtration and diafiltration to be carried out in 75 minutes. The unit consisted of 13 stages of 15.6 m² each. Concentration was carried out in the complete unit to a concentration factor of 1.71. Then one stage was closed and the active surface was thus reduced to 187.2 m². This stage was drained and the volume involved was permeated across the twelve remaining stages. The resulting concentration factor was 1.85. Analogously, 11 stages were closed successively and drained. When 12 stages had been closed and drained the active surface was reduced to 15.6 m². The concentration factor had increased to 18.5. Diafiltration had meanwhile been started. The stages already drained (12 stages) were washed with 200 litres of diafiltration water. The diafiltration water was supplied to the last stage and permeated. Finally the last stage was drained. The volume involved was supplied to a recovery step further in the process. This was 83.4 litres or 2.08%. The process loss ultimately amounted to only 4.7 litres or 0.12%.

### Example II

Analogous to example I (feed flow, temperature and pH). The ultrafiltration was now carried out in a unit of 230 m², with spirally wound modules of polyether sulphone membranes (SpiraCel-Wickelmodule UF-PES20). The unit consisted of four stages of 57.6 m² each. Concentration was carried out in the complete unit to a concentration factor of 10.6. Then one stage was closed and drained. Permeation of the drained volume was effected across three stages with a combined active surface of 172.8 m². The concentration factor achieved was 13.6. Analogously, another two stages were separately closed and drained. The drained volume was permeated across the remaining stage(s). The concentration factor achieved was now 30.77. The remaining active surface was 57.6 m². Diafiltration had meanwhile been started with 160 litres of water. The three stages already drained were washed one by one with the diafiltration water. The diafiltration water was added to and permeated in the last stage. The whole washing and diafiltration procedure was repeated once. Finally the last stage was drained to a recovery step further in the process. The volume involved was 28 litres or 0.70%. The overall process loss amounted to 8.9 litres or 0.22%. The entire operation was carried out in 80 minutes.

## Claims

1. Process for the removal of high-molecular particles from a process stream by means of ultrafiltration, characterized in that the ultrafiltration is performed in a unit comprising different stages, which different stages in the course of the ultrafiltration process are successively closed, drained and subjected to diafiltration and washing, the washing liquid leaving the one stage being used again in the next stage.

2. Process according to claim 1, wherein the unit is set up such that maximum drainage is achieved.

3. Process according to claim 1 or 2, wherein the drainage is effected under pressure.

4. Process according to any one of claims 1-3, wherein the drainable volume of the last stage in the process is recycled.

5. Process according to any one of claims 1-4, wherein the process stream consists of the reaction mixture obtained after enzymatic acylation of a β-lactam core.

6. Process according to claim 5, wherein the ultrafiltration is carried out a a temperature between 2 and 10°C.

7. Process for the removal of high-molecular particles from a process stream as described and elucidated by means of the examples.
